# FASCICULE DE BREVET EUROPEEN

(11) **EP 1 554 921 B1**
(45) Date de publication et mention de la délivrance du brevet: **02.11.2006**
(21) Numéro de dépôt: 05300036.0
(22) Date de dépôt: 14.01.2005
(51) Int. Cl.: A01D 57/20

(54) **Machine de coupe**
Mähmaschine
Cutting machine

(30) Priorité: 19.01.2004 FR 0400429
(43) Date de publication de la demande: 20.07.2005
(73) Titulaire: KUHN S.A., 67706 Saverne Cedex (FR)
(72) Inventeur: Billard, Sylvain, 67440 Reinhardsmunster (FR)
(74) Mandataire: Andres, Jean-Claude

(56) Documents cités:
- EP-A- 0 579 573
- EP-A- 1 106 051
- DE-U- 20 204 398
- US-A- 6 145 289

## Description

La présente invention se rapporte au domaine technique général du machinisme agricole. Elle concerne plus précisément une machine de coupe comportant :
- un châssis,
- un basculeur lié audit châssis au moyen d'une première articulation pivot d'axe dirigé vers le haut,
- une potence liée audit basculeur au moyen d'une deuxième articulation pivot d'axe dirigé suivant une direction d'avance au travail,
- un mécanisme de coupe destiné à couper un produit sur pied, ledit mécanisme de coupe étant lié à ladite potence au moyen d'une troisième articulation pivot d'axe dirigé suivant ladite direction d'avance au travail, et
- un dispositif de convoyage destiné à déplacer latéralement le produit coupé par ledit mécanisme de coupe.

Une telle machine de coupe est divulguée par le document **DE 202 04 398 UI**. Sur cette machine connue, le dispositif de convoyage est lié à un châssis secondaire au moyen d'un deuxième basculeur. Pour sa part, le châssis secondaire est lié de manière amovible au châssis supportant le mécanisme de coupe. De ce fait, l'utilisateur a la possibilité de déposer le châssis secondaire afin d'utiliser la machine de coupe sans le dispositif de convoyage. Cette machine de coupe connue a donc l'avantage d'être polyvalente. Cependant cette solution a l'inconvénient de nécessiter un deuxième basculeur et un châssis secondaire, d'où une augmentation du coût de fabrication et de la masse totale de la machine. De plus le passage entre une configuration où la machine de coupe comporte le dispositif de convoyage à une configuration où la machine de coupe ne comporte pas le dispositif de convoyage ne semble pas être pratique à réaliser. En effet, l'utilisateur doit tout d'abord séparer le châssis secondaire du châssis supportant le mécanisme de coupe. Cette opération est certainement longue et pénible à effectuer. Puis le châssis secondaire et le dispositif de convoyage doivent être remisés avant leur prochaine utilisation. Si en cours de travail les conditions du terrain font qu'il est à nouveau avantageux de regrouper le produit coupé, l'utilisateur doit alors retourner à l'endroit où le châssis secondaire et le dispositif de convoyage ont été remisés pour procéder au remontage. D'où encore une perte de temps considérable. Ces contraintes font que l'utilisateur ne va certainement pas adapter souvent sa machine de coupe aux conditions du terrain.

Sur cette machine connue, le deuxième basculeur est lié au châssis secondaire au moyen d'une articulation pivot. L'axe de cette articulation pivot est parallèle à l'axe de la première articulation pivot tout en étant décalé vers l'arrière par rapport à celle-ci. En cas de rencontre avec un obstacle durant le travail, ledit mécanisme de coupe et le dispositif de convoyage pivotent alors vers l'arrière autour de leur articulation pivot respective. Durant ce pivotement vers l'arrière, il apparaît un mouvement relatif entre le mécanisme de coupe et le dispositif de convoyage, transversalement à la direction d'avance au travail. Suite à ce décalage, il se peut qu'une partie du produit coupé sortant du mécanisme de coupe tombe à coté du dispositif de convoyage, d'où une perte de récolte inacceptable pour l'utilisateur.

Le but de la présente invention est d'améliorer la machine de coupe de l'état de la technique en simplifiant sa construction afin notamment d'en réduire le coût de fabrication, et en évitant toute perte de produit coupé lors d'un éventuel pivotement vers l'arrière dudit mécanisme de coupe autour de la première articulation.

A cet effet, la machine de coupe selon la présente invention est caractérisée par le fait que ledit dispositif de convoyage est lié audit basculeur de manière à pouvoir pivoter par rapport audit châssis autour de ladite première articulation pivot conjointement avec ledit mécanisme de coupe.

Ainsi on réduit considérablement le nombre de pièces nécessaire à la fixation dudit dispositif de convoyage d'où la simplification et la baisse du coût de fabrication. De plus, le mécanisme de coupe et le dispositif de convoyage pivotent désormais ensemble autour d'un même axe. Il n'y a donc plus de mouvement relatif transversal lors du pivotement vers l'arrière de ces derniers. On évite de la sorte toute perte du produit coupé.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- **la figure 1** représente, vue de dessus, une machine de coupe selon la présente invention,
- **la figure 2** représente, vue de dessus, la machine de coupe de la figure 1 après pivotement vers l'arrière du mécanisme de coupe et du dispositif de convoyage,
- **la figure** 3 représente, vue de coté, la machine de coupe de la figure 1 avec le dispositif de convoyage en position de travail,
- **la figure 4** représente, vue de coté, la machine de coupe de la figure 1 avec le dispositif de convoyage en position relevée.

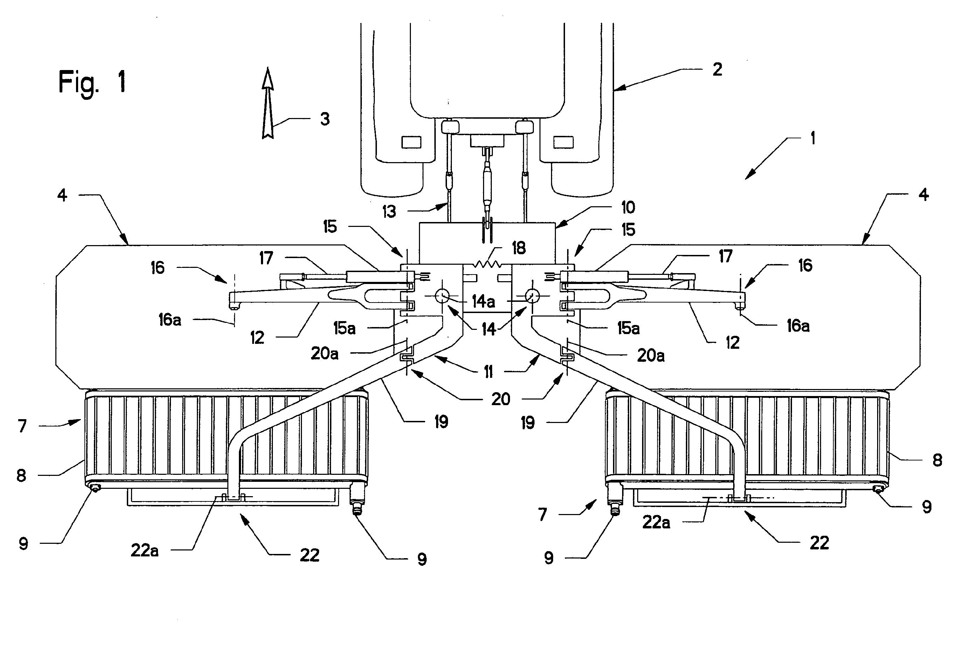

La figure 1 représente, vue de dessus, une machine de coupe (1) conforme à la présente invention. Ladite machine de coupe (1) est attelée à un véhicule moteur (2) qui la tire lors du travail suivant une direction et un sens d'avance représenté par la flèche (3). Dans la suite de la description, les notions suivantes "avant" et "arrière", "devant" et "derrière" sont définies par rapport au sens d'avance (3) et les notions "droite" et "gauche" sont définies en regardant ladite machine de coupe (1) de l'arrière dans le sens d'avance (3).

D'une manière connue de l'homme du métier, ladite machine de coupe (1) comporte un mécanisme de coupe (4) destiné à couper un produit sur pied, tel que de l'herbe par exemple. Lors du travail, ledit mécanisme de coupe (4) est disposé en arrière et sur le coté droit dudit véhicule moteur (2). Dans l'exemple de réalisation représenté sur les figures, ladite machine de coupe (1) comporte avantageusement un deuxième mécanisme de coupe (4) disposé, lors du travail, en arrière et sur le coté gauche dudit véhicule moteur (2). La présence des deux mécanismes de coupe (4) permet d'augmenter la largeur de travail de ladite machine de coupe (1). La suite de la description s'appliquera indifféremment à l'un ou à l'autre coté de ladite machine de coupe (1).

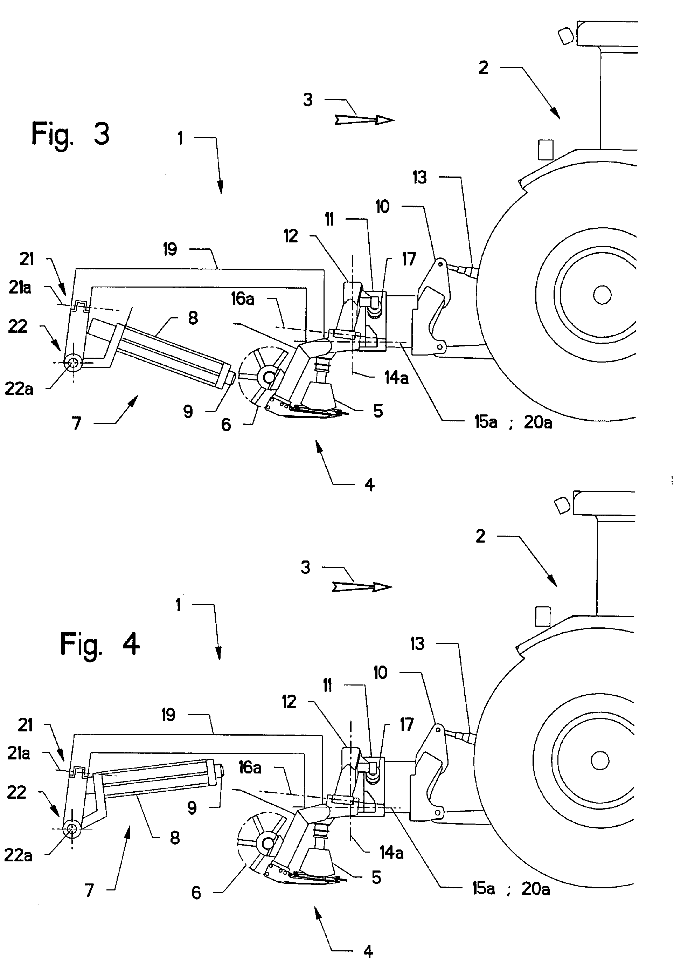

A la lumière des figures 3 et 4, ledit mécanisme de coupe (4) comporte des organes de coupe (5) disposés les uns à coté des autres. Lors du travail, ledit mécanisme de coupe (4) s'étend transversalement à ladite direction d'avance (3) et lesdits organes de coupe (5) sont entraînés en rotation autour d'un axe respectif dirigé vers le haut. D'une manière préférentielle, ledit mécanisme de coupe (4) comporte encore un dispositif de traitement (6) destiné à accélérer le séchage du produit coupé. Ledit dispositif de traitement (6) est réalisé par exemple au moyen d'un rotor muni de fléaux comme représenté sur les figures 3 et 4. Un tel mécanisme de coupe (4) est couramment employé sur les faucheuses et les faucheuses-conditionneuses connues de l'homme du métier, il ne sera donc pas décrit davantage.

Ladite machine de coupe (1) comporte encore un dispositif de convoyage (7) destiné à déplacer, transversalement à ladite direction d'avance (3), le produit coupé sortant dudit mécanisme de coupe (4). Ledit dispositif de convoyage (7) permet ainsi avantageusement de déposer le produit coupé sur un andain déjà présent au sol ou, selon le cas, de regrouper en un seul andain le produit coupé sortant de plusieurs mécanismes de coupe (4). Pour ce faire, ledit dispositif de convoyage (7) comporte par exemple une bande sans fin (8) enroulée sur deux rouleaux (9) dont l'un au moins est moteur. Ledit dispositif de convoyage (7) est disposé derrière ledit mécanisme de coupe (4) de manière à ce que le produit coupé, le cas échéant après traitement, tombe sur le brin supérieur de ladite bande sans fin (8).

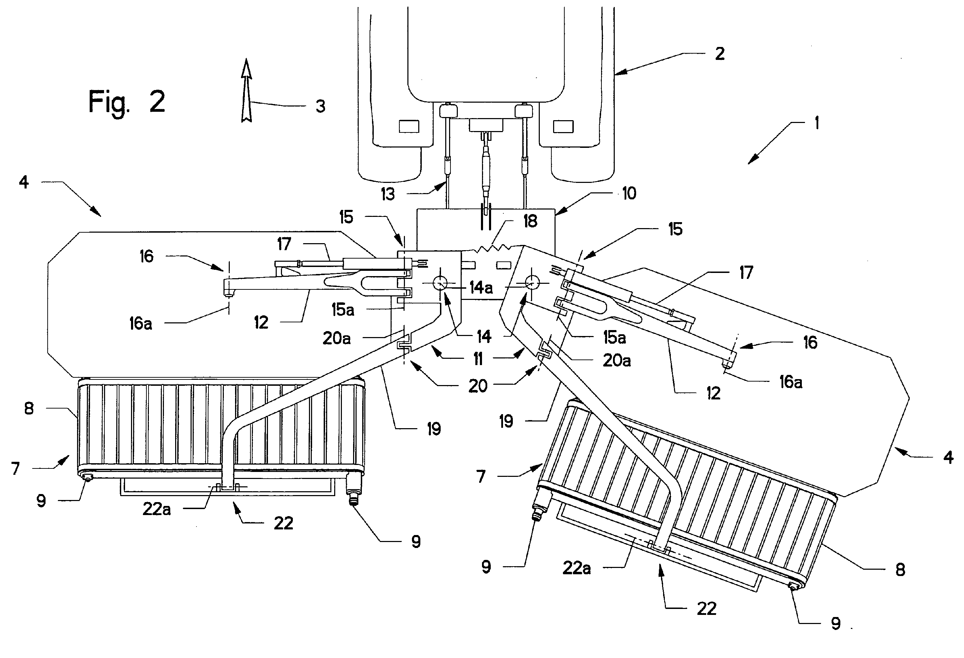

Ladite machine de coupe (1) comporte en sus un châssis (10), un basculeur (11) et une potence (12). Ledit châssis (10) est destiné à être lié à un dispositif d'attelage (13) dudit véhicule moteur (2). Ledit basculeur (11) est lié audit châssis (10) au moyen d'une première articulation pivot (14) d'axe (14a) dirigé vers le haut. Une extrémité de ladite potence (12) est liée audit basculeur (11) au moyen d'une deuxième articulation pivot (15) d'axe (15a) dirigé suivant ladite direction d'avance (3). L'autre extrémité de ladite potence (12) est liée audit mécanisme de coupe (4) au moyen d'une troisième articulation pivot (16) d'axe (16a) également dirigé suivant ladite direction d'avance (3). A la lumière des figures 1 et 2, pour les machines de coupe (1) comportant deux mécanismes de coupe (4), lesdits basculeurs (11) sont liés à un unique châssis (10).

Ladite première articulation (14) permet avantageusement audit mécanisme de coupe (4) de pivoter vers l'arrière par rapport audit châssis (10) en cas de rencontre avec un obstacle. Ladite machine de coupe (1) est de préférence équipée d'un dispositif de maintien (18) permettant de maintenir dans une certaine limite ledit mécanisme de coupe (4) dans sa position de travail mais autorisant le pivotement vers l'arrière en cas d'effort trop important. D'une manière avantageuse, ledit dispositif de maintien (18) permet en sus de ramener automatiquement ledit mécanisme de coupe (4) dans sa position de travail après le passage de l'obstacle. Un tel dispositif de maintien (18) est connu de l'homme du métier, il ne sera donc pas décrit davantage. Ladite deuxième articulation (15) et ladite troisième articulation (16) permettent audit mécanisme de coupe (4) de suivre les dénivellations du sol lors du travail indépendamment de la position dudit châssis (10). D'une manière préférentielle, ladite machine de coupe (1) comporte encore un dispositif d'allégement et de manoeuvre (17) destiné lors du travail à reporter au moins une partie du poids dudit mécanisme de coupe (4) sur ledit châssis (10). Ledit dispositif d'allégement et de manoeuvre (17) est également utilisé pour pivoter ledit mécanisme de coupe (4) vers le haut autour de ladite deuxième articulation (15) afin d'atteindre une position de transport. Un tel dispositif d'allégement et de manoeuvre (17) est réalisé par exemple au moyen d'un vérin hydropneumatique.

Selon une caractéristique importante de la présente invention, ledit dispositif de convoyage (7) est lié au même basculeur (11) de manière à pouvoir pivoter par rapport audit châssis (10) autour de ladite première articulation (14) conjointement avec ledit mécanisme de coupe (4).

A cet effet dans l'exemple de réalisation représenté sur les figures, ledit dispositif de convoyage (7) est lié audit basculeur (11) au moyen d'un bras support (19). D'une manière préférentielle, une extrémité dudit bras support (19) est lié audit basculeur (11) au moyen d'une quatrième articulation pivot (20) dont l'axe (20a) est de préférence au moins sensiblement confondu avec l'axe (15a) de ladite deuxième articulation (15). Ledit dispositif de convoyage (7) peut ainsi être pivoté vers le haut autour de ladite quatrième articulation (20) de manière à atteindre une position de transport. D'une manière également préférentielle et à la lumière plus précisément des figures 3 et 4, l'autre extrémité dudit bras support (19) est lié audit dispositif de convoyage (7) au moyen d'une cinquième articulation (21) dont l'axe (21a) est avantageusement au moins sensiblement confondu avec l'axe (16a) de ladite troisième articulation (16). Lors du travail, ledit dispositif de convoyage (7) peut ainsi parfaitement suivre les mouvements dudit mécanisme de coupe (4) de manière à éviter toute perte de fourrage. A cet effet, il est avantageusement prévu des points d'appui entre ledit dispositif de convoyage (7) et ledit mécanisme de coupe (4). Ladite machine de coupe (1) comporte en sus un deuxième dispositif d'allégement et de manoeuvre, non représenté, destiné lors du travail à reporter au moins une partie du poids dudit dispositif de convoyage (7) sur ledit châssis (10). Ledit deuxième dispositif d'allégement et de manoeuvre est en sus destiné à pivoter ledit dispositif de convoyage (7) vers le haut autour de ladite quatrième articulation (20) pour atteindre la position de transport. Ledit dispositif d'allégement et de manoeuvre (17) et ledit deuxième dispositif d'allégement et de manoeuvre peuvent avantageusement être commandés et/ou réglés simultanément depuis le poste de pilotage dudit véhicule moteur (2).

D'une manière particulièrement avantageuse, il est en sus prévu une sixième articulation pivot (22) entre ledit dispositif de convoyage (7) et l'extrémité la plus proche dudit bras support (19). Lors du travail, l'axe (22a) de ladite sixième articulation (22) est au moins sensiblement horizontal et transversal à ladite direction d'avance (3). Un organe moteur est prévu pour pivoter ledit dispositif de convoyage (7) autour de ladite sixième articulation (22). Ainsi à la lumière des figures 3 et 4, ladite bande sans fin (8) peut occuper au moins deux positions par rapport audit bras support (19). Sur la figure 3, ladite bande sans fin (8) occupe une position active. Dans cette position active, le flux du produit coupé sortant dudit mécanisme de coupe (4) tombe sur le brin supérieur de ladite bande sans fin (8) pour être déplacé latéralement. Par contre sur la figure 4, ladite bande sans fin (8) occupe une position inactive. Ici, le flux du produit coupé sortant dudit mécanisme de coupe (4) passe sous ladite bande sans fin (8) et tombe ainsi directement sur le sol sans avoir été déplacé latéralement. Un autre organe moteur commandé depuis le poste de pilotage dudit véhicule moteur (2) permet de basculer ledit dispositif de convoyage (7) autour de ladite sixième articulation (22). L'utilisateur peut ainsi très facilement et très rapidement modifier la configuration de ladite machine de coupe (1) en fonction des conditions du terrain.

Il est bien évident que l'invention n'est pas limitée aux modes de réalisation décrits et représentés sur les dessins annexés. Des modifications restent possibles, notamment en ce qui concerne la constitution des divers éléments ou par substitution d'équivalents techniques, sans sortir pour autant du domaine de protection tel que défini dans les revendications.

Ainsi, ladite machine de coupe (1) peut encore comporter un troisième mécanisme de coupe disposé à l'avant dudit véhicule moteur (2). Selon un autre exemple de réalisation, ledit dispositif de convoyage (7) est réalisé au moyen de rouleaux disposés côte à côte et entraînés en rotation.

## Revendications

1. Machine de coupe comportant :
- un châssis (10),
- un basculeur (11) lié audit châssis (10) au moyen d'une première articulation pivot (14) d'axe (14a) dirigé vers le haut,
- une potence (12) liée audit basculeur (11) au moyen d'une deuxième articulation pivot (15) d'axe (15a) dirigé suivant une direction d'avance au travail (3),
- un mécanisme de coupe (4) destiné à couper un produit sur pied, ledit mécanisme de coupe (4) étant lié à ladite potence (12) au moyen d'une troisième articulation pivot (16) d'axe (16a) dirigé suivant ladite direction d'avance au travail (3), et
- un dispositif de convoyage (7) destiné à déplacer latéralement le produit coupé par ledit mécanisme de coupe (4),
***caractérisée par le fait que*** ledit dispositif de convoyage (7) est lié audit basculeur (11) de manière à pouvoir pivoter par rapport audit châssis (10) autour de ladite première articulation (14) conjointement avec ledit mécanisme de coupe (4).

2. Machine de coupe selon la revendication 1, ***caractérisée par le fait que*** ledit dispositif de convoyage (7) est lié audit basculeur (11) au moyen d'un bras support (19), et une extrémité dudit bras support (19) est lié audit basculeur (11) au moyen d'une quatrième articulation pivot (20).

3. Machine de coupe selon la revendication 2, ***caractérisée par le fait que*** l'axe (20a) de ladite quatrième articulation pivot (20) est au moins sensiblement confondu avec l'axe (15a) de ladite deuxième articulation (15)

4. Machine de coupe selon la revendication 2 ou 3, ***caractérisée par le fait que*** ledit bras support (19) est lié audit dispositif de convoyage (7) au moyen d'une cinquième articulation pivot (21).

5. Machine de coupe selon la revendication 4, ***caractérisée par le fait que*** l'axe (21a) de ladite cinquième articulation pivot (21) est au moins sensiblement confondu avec l'axe (16a) de ladite troisième articulation (16)

6. Machine de coupe selon l'une quelconque des revendications 1 à 5, ***caractérisée par le fait que*** ladite machine de coupe (1) comporte un dispositif d'allégement et de manoeuvre (17) destiné, lors du travail, à reporter au moins une partie du poids dudit mécanisme de coupe (4) sur ledit châssis (10), et destiné à pivoter ledit mécanisme de coupe (4) vers le haut autour de ladite deuxième articulation (15) pour atteindre une position de transport.

7. Machine de coupe selon l'une quelconque des revendications 1 à 6, ***caractérisée par le fait que*** ladite machine de coupe (1) comporte un deuxième dispositif d'allégement et de manoeuvre destiné, lors du travail, à reporter au moins une partie du poids dudit dispositif de convoyage (7) sur ledit châssis (10), et destiné à pivoter ledit dispositif de convoyage (7) vers le haut autour de ladite quatrième articulation (20) pour atteindre une position de transport.

8. Machine de coupe selon les revendications 6 et 7, ***caractérisée par le fait que*** ledit dispositif d'allégement et de manoeuvre (17) et ledit deuxième dispositif d'allégement et de manoeuvre peuvent avantageusement être commandés et/ou réglés simultanément.

9. Machine de coupe selon l'une quelconque des revendications 1 à 8, ***caractérisée par le fait que*** ladite machine de coupe (1) comporte une sixième articulation pivot (22) entre ledit dispositif de convoyage (7) et l'extrémité la plus proche dudit bras support (19).

10. Machine de coupe selon la revendication 9, ***caractérisée par le fait que*** l'axe (22a) de ladite sixième articulation (22) est au moins sensiblement horizontal et transversal à ladite direction d'avance (3).

## Claims

1. A cutting machine comprising:
- a frame (10),
- a tilting element (11) connected to the said frame (10) by means of a first pivot articulation (14) with an upwardly directed axis (14a),
- a bracket (12) connected to the said tilting element (11) by means of a second pivot articulation (15) with an axis (15a) directed in a direction of travel during work (3),
- a cutting mechanism (4) intended to cut a standing product, the said cutting mechanism (4) being connected to the said bracket (12) by means of a third pivot articulation (16) with an axis (16a) directed in the said direction of travel during work (3), and
- a conveyor device (7) intended to move sideways the product cut by the said cutting mechanism (4),
***characterized in* that** the said conveyor device (7) is connected to the said tilting element (11) in such a manner as to be able to pivot relative to the said frame (10) about the said first articulation (14) together with the said cutting mechanism (4).

2. Cutting machine as claimed in claim 1, ***characterized in* that** the said conveyor device (7) is connected to the said tilting element (11) by means of a support arm (19) and one end of the said support arm (19) is connected to the said tilting element (11) by means of a fourth pivot articulation (20).

3. Cutting machine as claimed in claim 2, ***characterized in* that** the axis (20a) of the said fourth pivot articulation (20) is at least substantially coincident with the axis (15a) of the said second articulation (15).

4. Cutting machine as claimed in claim 2 or 3, ***characterized in* that** the said support arm (19) is connected to the said conveyor device (7) by means of a fifth pivot articulation (21).

5. Cutting machine as claimed in claim 4, ***characterized in* that** the axis (21a) of the said fifth pivot articulation (21) is at least substantially coincident with the axis (16a) of the said third articulation (16).

6. Cutting machine as claimed in any one of claims 1 to 5, ***characterized in* that** the said cutting machine (1) comprises a lightening and maneuvering device (17) intended, during work, to transfer at least part of the weight of the said cutting mechanism (4) onto the said frame (10), and intended to pivot the said cutting mechanism (4) upward about the said second articulation (15) to reach a transport position.

7. Cutting machine as claimed in any one of claims 1 to 6, ***characterized in* that** the said cutting machine (1) comprises a second lightening and maneuvering device intended, during work, to transfer at least part of the weight of the said conveyor device (7) onto the said frame (10), and intended to pivot the said conveyor device (7) upward about the said fourth articulation (20) to reach a transport position.

8. Cutting machine as claimed in claims 6 and 7, ***characterized in* that** the said lightening and maneuvering device (17) and the said second lightening and maneuvering device may advantageously be controlled and/or adjusted simultaneously.

9. Cutting machine as claimed in any one of claims 1 to 8, ***characterized in* that** the said cutting machine (1) comprises a sixth pivot articulation (22) between the said conveyor device (7) and the closest end of the said support arm (19).

10. Cutting machine as claimed in claim 9, ***characterized in* that** the axis (22a) of the said sixth articulation (22) is at least substantially horizontal and transverse to the said direction of travel (3).

## Patentansprüche

1. Mähmaschine mit
- einem Rahmen (10),
- einer Kippvorrichtung (11), die mit dem Rahmen (10) mittels eines ersten Zapfengelenks (14) mit einer nach oben gerichteten Achse (14a) verbunden ist,
- einem Träger (12), der mit der Kippvorrichtung (11) mittels eines zweiten Zapfengelenks (15) mit einer in eine Vorschubrichtung (3) bei der Arbeit ausgerichteten Achse (15a) verbunden ist,
- einem Schneidmechanismus (4), der dazu bestimmt ist, ein aufrecht stehendes Produkt zu mähen, wobei der Schneidmechanismus (4) mit dem Träger (12) mittels eines dritten Zapfengelenks (16) mit einer in die Vorschubrichtung (3) bei der Arbeit ausgerichteten Achse (16a) verbunden ist, und
- einer Fördereinrichtung (7), die dazu bestimmt ist, das vom Schneidmechanismus (4) gemähte Produkt seitlich zu verschieben,
***dadurch gekennzeichnet,* dass** die Fördereinrichtung (7) mit der Kippvorrichtung (11) derart verbunden ist, dass sie in Bezug auf den Rahmen (10) um das erste Gelenk (14) gemeinsam mit dem Schneidmechanismus (4) schwenken kann.

2. Mähmaschine nach Anspruch 1, ***dadurch gekennzeichnet,* dass** die Fördereinrichtung (7) mit der Kippvorrichtung (11) mittels eines Stützarms (19) verbunden ist und ein Ende des Stützarms (19) mit der Kippvorrichtung (11) mittels eines vierten Zapfengelenks (20) verbunden ist.

3. Mähmaschine nach Anspruch 2, ***dadurch gekennzeichnet,* dass** die Achse (20a) des vierten Zapfengelenks (20) mindestens im Wesentlichen mit der Achse (15a) des zweiten Gelenks (15) zusammenfällt.

4. Mähmaschine nach Anspruch 2 oder 3, ***dadurch gekennzeichnet,* dass** der Stützarm (19) mit der Fördereinrichtung (7) mittels eines fünften Zapfengelenks (21) verbunden ist.

5. Mähmaschine nach Anspruch 4, ***dadurch gekennzeichnet,* dass** die Achse (21a) des fünften Zapfengelenks (21) mindestens im Wesentlichen mit der Achse (16a) des dritten Gelenks (16) zusammenfällt.

6. Mähmaschine nach irgend einem der Ansprüche 1 bis 5, ***dadurch gekennzeichnet,* dass** die Mähmaschine (1) eine Entlastungs- und Betätigungsvorrichtung (17) umfasst, die dazu bestimmt ist, bei der Arbeit zumindest einen Teil des Gewichts des Schneidmechanismus (4) auf den Rahmen (10) zu übertragen und den Schneidmechanismus (4) nach oben um das zweite Gelenk (15) zu schwenken, um eine Transportposition zu erreichen.

7. Mähmaschine nach irgend einem der Ansprüche 1 bis 6, ***dadurch gekennzeichnet,* dass** die Mähmaschine (1) eine zweite Entlastungs- und Betätigungsvorrichtung umfasst, die dazu bestimmt ist, bei der Arbeit zumindest einen Teil des Gewichts der Fördereinrichtung (7) auf den Rahmen (10) zu übertragen und die Fördereinrichtung (7) nach oben um das vierte Gelenk (20) zu schwenken, um eine Transportposition zu erreichen.

8. Mähmaschine nach den Ansprüchen 6 und 7, ***dadurch gekennzeichnet,* dass** die Entlastungs- und Betätigungsvorrichtung (17) und die zweite Entlastungs- und Betätigungsvorrichtung vorzugsweise gleichzeitig gesteuert und/oder eingestellt werden können.

9. Mähmaschine nach irgend einem der Ansprüche 1 bis 8, ***dadurch gekennzeichnet,* dass** die Mähmaschine (1) ein sechstes Zapfengelenk (22) zwischen der Fördereinrichtung (7) und dem nächsten Ende des Stützarms ( 19) umfasst.

10. Mähmaschine nach Anspruch 9, ***dadurch gekennzeichnet,* dass** die Achse (22a) des sechsten Gelenks (22) mindestens im Wesentlichen horizontal und quer zur Vorschubrichtung (3) ist.
